(19) Europäisches Patentamt
European Patent Office
Office européen des brevets

(11) **EP 1 147 432 B1**

(12) **EUROPÄISCHE PATENTSCHRIFT**

(45) Veröffentlichungstag und Bekanntmachung des Hinweises auf die Patenterteilung:
**15.04.2009 Patentblatt 2009/16**

(51) Int Cl.:
*G01S 7/35* (2006.01)   *G01S 13/34* (2006.01)
*G01S 13/95* (2006.01)   *H04B 1/10* (2006.01)

(21) Anmeldenummer: **00912337.3**

(22) Anmeldetag: **26.01.2000**

(86) Internationale Anmeldenummer:
**PCT/DE2000/000222**

(87) Internationale Veröffentlichungsnummer:
**WO 2000/045192 (03.08.2000 Gazette 2000/31)**

(54) **EMPFANGSEINRICHTUNG EINER RADAREINRICHTUNG UND RADAREINRICHTUNG**

RECEIVING DEVICE FOR A RADAR DEVICE AND CORRESPONDING RADAR DEVICE

UNITE RECEPTRICE D'UN RADAR, ET RADAR

(84) Benannte Vertragsstaaten:
**DE FR IT NL SE**

(30) Priorität: **28.01.1999   DE 19903301**

(43) Veröffentlichungstag der Anmeldung:
**24.10.2001 Patentblatt 2001/43**

(73) Patentinhaber: **Metek Meteorologische Messtechnik GmbH**
**25337 Elmshorn (DE)**

(72) Erfinder: **PETERS, Gerhard**
**D-22547 Hamburg (DE)**

(74) Vertreter: **Pütz-Poulalion, Marc**
**Patentanwaltskanzlei Heinemeyer**
**Bergmannstrasse 24**
**80339 München (DE)**

(56) Entgegenhaltungen:
**US-A- 5 122 805        US-A- 5 387 917**

- **MEINEL H: "Entfernungsmessung mit frequenzmodulierten Millimeterwellen-Dauerstrich-Radargeräten" TECHNISCHE MITTEILUNGEN AEG, Bd. 67, Nr. 2, 1977, Seiten 111-112, XP002140777**
- **LIGTHART L P: "System considerations of the FM-CW Delft atmospheric research radar (DARR)" , IEEE 1980 INTERNATIONAL RADAR CONFERENCE, ARLINGTON, VA, USA, 28-30 APRIL 1980 , 1980, NEW YORK, NY, USA, IEEE, USA, PAGE(S) 38 - 43 XP002140863 in der Anmeldung erwähnt Abbildung 1**

**Beschreibung**

Die Erfindung betrifft Radareinrichtungen, inbesondere im Danerstrichbetrieb, inbesondere für radioakustische Sondierungssysteme. (RASS) mit einer Empfangseinrichtung.

Radioakustische Sondierungssysteme (im folgenden RASS genannt) sind kohärente Radarsysteme, mit denen die Streuung an Schallwellen in der Atmosphäre gemessen werden, um hieraus Ober die Schallgeschwindigkeit Temperatur- und Windprofile abzuleiten. Die räumliche Auflösung erfolgt hierbei Ober die Laufzeit der Radarwellen (beispielsweise bei einem Bragg-RASS) oder Ober die Laufzeit der Schallwellen (Doppler-RASS). Insbesondere bei einem Doppler-RASS ist es möglich, den elektromagnetischen Sender im Dauerstrichbetrieb auszuführen. Insbesondere für diese Art des Betriebs ist die erfindungsgemäBe Empfangseinrichtung vorgesehen. Charakteristisch hierfür ist, daß am Empfängereingang ein relativ hoher Pegel durch ein übersprechendes Signal des Senders und ein dagegen meist sehr schwacher Nutzpegel durch die Streuung an den Schallwellen anliegt.

üblicherweise sind Empfangseinrichtungen bzw. Radareinrichtungen so aufgebaut, daß ein Teil des Sendesignals ausgekoppelt wird und auf den sogenannten "L0"-Eingang" eines Mischers gegeben wird, der hinter einer Empfangsantenne angeordnet ist. Der Mischer kann hierbei ein Vierquadrantenmischer oder Doppelgegentaktmischer bzw. Balanced-Mischer sein. Das empfangene Nutzsignal wird dann mit dem ausgekoppelten Signal bzw. "L0"-Signal gemischt, d.h. im wesentlichen miteinander multipliziert und der ins Basisband herabgemischte Signalanteil wird dann weiter analysiert. Hierbei tritt das Problem auf, daß Phasenschwankungen zwischen dem ausgekoppelten Signal und dem übersprechenden Signal am Mischerausgang zu einer zeitlich variablen Spannung führen, die wegen der relativ groBen Amplitude des übersprechenden Signals das Nutzsignal völlig maskieren kann. Es ist zwar eine gewisse Separierung des Nutz- und Störsignals aufgrund der Frequenzverschiebung des Nutzsignals, die der Dopplerverschiebung des Echos eines sich mit Schallgeschwindigkeit entfernenden Objekts entspricht, möglich. Gleichwohl führen Phasenschwankungen zwischen dem ausgekoppelten Signal und dem übersprechslgnal zu entsprechenden Spannungsschwankungen des gemischten Signals. Obwohl die wesentlichen spektralen Anteile dieser Spannungsschwankungen bei niedrigeren Frequenzen als die der Dopplerverschiebung des Signals angeordnet sind, so werden doch starke Störungen aufgrund des großen Pegelverhältnisses zwischen Übersprech- und Nutzsignal hervorgerufen.

Übliche Empfangseinrichtung für eine Radareinrichtung insbesondere im Dauerstrichbetrieb, insbesondere für radioakustische Sondierungssysteme mit einer Empfangsantenne und einer Mischvorrichtung zum Mischen eines Nutzsignals mit einem weiteren Signal sind beispielsweise aus der Veröffentlichung "System Considerations of the FN-CW Delft Atmospheric Research Radar (DARR)", Leo P. Ligthart, IEEE International Radar Conference, 1980 Seite 38 ff. bekannt.

Um die starken Störungen zu vermindern, wird üblicherweise ein zusätzliche Signal mit möglichst gleicher Amplitude und Laufzeitverschiebung wie das Übersprechsignal vom Gesamtsignal subtrahiert. Die Einspeisung dieses Hilfssignals kann entweder über die Antenne erfolgen oder über einen sogenannten Combiner in die Leitung von der Antenne zum Mischer. Dieses Verfahren ist allerdings instabil. Geringe Änderungen beispielsweise in der Umgebung der Antennen können sowohl den Pegel als auch die Laufzeit des Übersprechens so sehr verändern, daß das Hilfssignal neu justiert werden muß.

Aus der US 5,122,805 ist ein RASS-Radarsystem bekannt, mit dem Wind- und Temperaturprofile für die Atmosphäre erstellt werden sollen. Bei der beschriebenen technischen Lösung wird ein Teil des Sendesignals ausgekoppelt und der Empfangseinheit über eine Leitung zugeführt. Das Nutzsignal, das über eine Leitung ausgekoppelte Signal und ein übersprechendes Störsignal, werden in einem Mischer gemischt. Ausgehend von dem bekannten Stand der Technik liegt der Erfindung die Aufgabe zugrunde, eine Radareinrichtung für radioakustische Sondierungssysteme zum Bestimmen von Temperatur- und Windprofilen in der Atmosphäre und einer Empfangseinrichtung vereinfachten konstruktiven Aufbau verfügt. Hierbei sollen mit relativ wenigen Komponenten Phasenschwankungen des Übersprechsignals retativ zum Nutzsignal geringe Störungen hervorrufen. Es ist ferner eine Aufgabe der vorlegenden Erfindung auch im Verhältnis sehr schwache Nutzsignale noch aufzulösen, und die Empfindlichkeit bei entsprechenden Empfangseinrichtungen bzw. Radareinrichtungen zu erhöhen.

Gelöst wird diese Aufgabe dadurch, dass eine Radareinrichtung für radioakustische Sondierungssysteme zum Bestimmen von Temperatur- und Windprofilen in der Atmosphäre gemäß Anspruch 1

Das Mischsignal enthält in diesem Fall keine Produkte aus zwei großen Faktoren sondern nur von einem großen und einem kleinen Faktor. Bei den bekannten Empfangseinrichtungen enthält das Mischsignal als Summensignal nämlich ein Produkt zweier großer Faktoren, also von dem ausgekoppelten Signal mit dem Übersprechsignal und weitere Produkte. Im Rahmen dieser Erfindung enthält das Mischsignal als wesentlichen Anteil ein Produkt aus dem großen Faktor eines Störsignals und dem kleinen Faktor des Nutzsignals.

Wenn das Störsignal von einem Sendesignal einer Sendeeinrichtung der Radareinrichtung auf die Empfangseinrichtung überspricht, ist der im wesentlichen verbleibende Anteil des Mischsignals ein Produkt aus dem Übersprechsignal und dem Nutzsignal.

Ein optimales Signal-Rauschverhältnis wird nur in einem bestimmten Pegelbereich des Übersprechsignals erzielt. Das Übersprechen bzw. das Übersprechsignal hat aber zunächst einmal einen nicht vorhersehbare Pegel. Ist der Pegel des Störsignals zu gering, so kann vorzugsweise eine Pegelverstärkungsvorrichtung vorgesehen sein.

Als Pegelverstärkungsvorrichtung ist ein Verstärker vorgesehen, der zwischen Empfangsantenne und Mischvorrichtung angeordnet ist. Zusätzlich zu dem Vorteil des ausreichenden Verstärkungsfaktorsistic der Vorteil einer nur durch die Rauschzahl des Vorverstärkers determinierten Rauschzahl des gesamten Empfängers erzielbar.

Weiter vorzugsweise umfaßt die Pegelverstärkungsvorrichtung einen Reflektor, der in der Nähe der Sendeeinrichtung angeordnet ist. Diese vorzugsweise Ausführungsform ist relativ unempfindlich, da der Übersprechpegel typischerweise um eine Größenordnung schwanken darf, ohne daß die Funktion merklich beeinflußt wird.

Sofern der Übersprechpegel zu groß ist, ist vorzugsweise eine Pegelverstärkungsvorrichtung vorgesehen, die eine Verstärkung des Pegels mit einem Wert ermöglicht, der kleiner als 1 ist. Vorzugsweise ist zur Verstärkung des Pegels mit einem Wert, der kleiner als 1 ist eine Abschirmung der Sende- und/oder Empfangsantenne vorgesehen. Durch diese Maßnahme wird selektiv der Obersprechpegel, nicht aber der Nutzsignalpegel reduziert. Ferner vorzugsweise wird der Übersprechpegel durch eine geeignete Plazierung bzw. Konstruktion der Sende- und Empfangsantennen vermindert.

Weiter vorzugsweise weist die Mischvorrichtung nur einen Eingang auf. Eine besonders bevorzugte und einfache Ausführungsform der Mischvorrichtung ist diejenige, daß die Mischvorrichtung eine Detektordiode und insbesondere eine Schottky-Diode ist.

Die Erfindung wird nachstehend ohne Beschränkung des allgemeinen Erfindungsgedankens anhand von Ausführungsbeispielen unter Bezugnahme auf die Zeichnungen exemplarisch beschrieben, auf die im übrigen bezüglich der Offenbarung aller im Text nicht näher erläuterten erfindungsgemäßen Einzelheiten ausdrücklich verwiesen wird. Es zeigen:

Fig. 1    3 schematische Darstellungen von Radareinrichtungen, wobei die dargestellten Radareinrichtungen der Fig. 1 a) und 1 b) Radareinrichtung gemäß des Standes der Technik sind und gemäß der Fig. 1 c) ein Ausführungsbelsplels einer Radareinrichtung mit einer Empfangseinrichtung gemäß der Erfindung darstellt,

Fig. 2    eine schematische Darstellung einer weiteren Ausführungsform der Erfindung.

In den folgenden Figuren sind jeweils gleiche oder entsprechende Teile mit denselben Bezugszeichen bezeichnet, so daß auf eine erneute Vorstellung verzichtet wird und lediglich die Abweichungen der in diesen Figuren dargestellten Ausführungsbeispiele gegenüber dem ersten Ausführungsbeispiel erläutert werden.

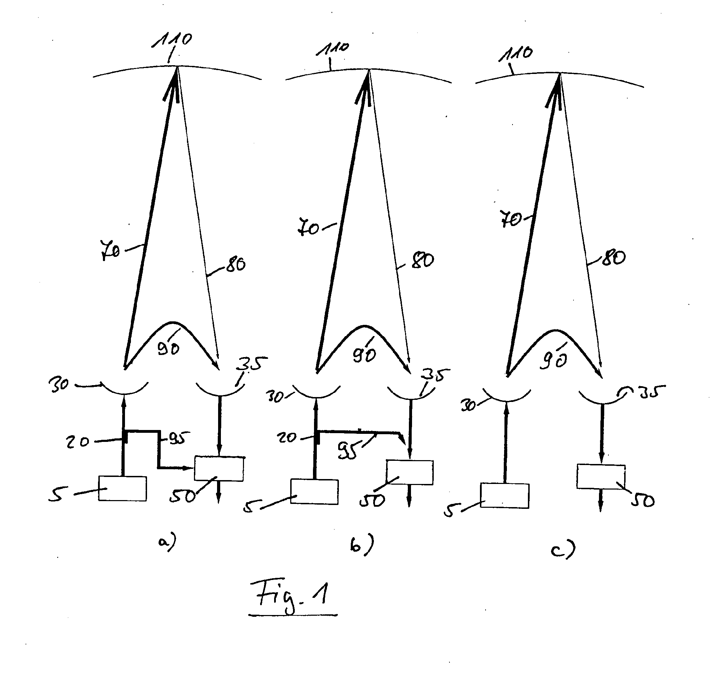

In Fig. 1 a) und b) ist eine herkömmliche Radareinrichtung in schematischer Darstellung gezeigt. Von einem

Sender 5 wird ein Signal auf die Senderantenne 30 gegeben. Das Sendesignal 70 wird an Schallwellen 110 reflektiert. Durch die Reflektion gelangt ein Nutzsignal 80 zu einer Empfangsantenne 40. Dieses wird einem Mischer 50 zugeführt. Der Mischer 50 ist in dem Ausführungsbeispiel der Fig. 1 a) ein sogenannter Balanced-Mischer bzw. Vierquadrantenmischer im Doppelgegentakt oder Zweiweggleichrichter im Doppelgegentakt. Diesem Balanced-Mischer im Doppelgegentakt wird auch ein aus dem Sendesignal über einen Koppler 20 ausgekoppeltes Signal 95 zugeführt.

Außerdem wird der Empfangseinrichtung ein Übersprechsignal 90 zugeführt, das unvermeidlich ist. Der Mischer kann allgemein als Multiplizierer betrachtet werden. Bei beispielsweise sinusförmigen Sende- und Empfangssignalen entstehen auf diese Weise am Mischer Ausgangssignale mit der Summen- und Differenzfrequenz. Die Summenfrequenz wird im allgemeinen durch Filterung unterdrückt. Die Differenzfrequenz ist in dem hier gezeigten Beispiel und bei einem Streusignal von einem nicht-bewegten Ziel gleich Null. Bei einem dopplerverschobenen Nutzsignal weist das Nutzsignal eine charakteristische Frequenzverschiebung auf, wodurch die Differenzfrequenz ungleich Null wird.

Eine andere Ausführungsform ist in Figur 1 b) dargestellt, bei der anstelle eines sogenannten Balanced-Mischers im Doppelgegentakt ein Mischer 50 Verwendung findet, der nur einen Eingang aufweist. Das ausgekoppelte Signal 95 wird dann dem Nutzsignal schon zwischen der Empfangsantenne 35 und dem Mischer 50 zugeführt.

In vielen Anwendungen ist das vom zu erfassenden Volumen gestreute Signal sehr schwach gegenüber dem auf einem anderen Weg vom Sender zum Empfänger übersprechenden Signal 90, daß auch "Störsignal" genannt wird. Dieses ist beispielsweise eine typische Situation bei allen meteorologischen Fernerkundungsanwendungen. Prinzipiell kann das Störsignal dadurch verringert werden, daß dem Sendesignal eine geeignete Phasen- oder Frequenzmodulation aufgeprägt wird, so daß eine Entfernungsauflösung möglich ist. Das Störsignal kann auch dadurch verringert werden, daß das Nutzsignal eine charakteristische Frequenzverschiebung aufweist, wie beispielsweise bei dem RASS oder einem Verkehrsradar. Wenn das Nutzsignal allerdings sehr schwach ist, wird eine hohe Anforderung an die Phasenstabilität des Störsignals gestellt. Auch wenn der Sender sehr stabil ist, führen mechanische Schwankungen in der Antennenumgebung unter Umständen zu Phasenschwankungen des Störsignals, die nicht vermieden werden können. Bei der Mischung führt dieses zu Gleichspannungsschwankungen, die das Nutzsignal völlig maskieren können.

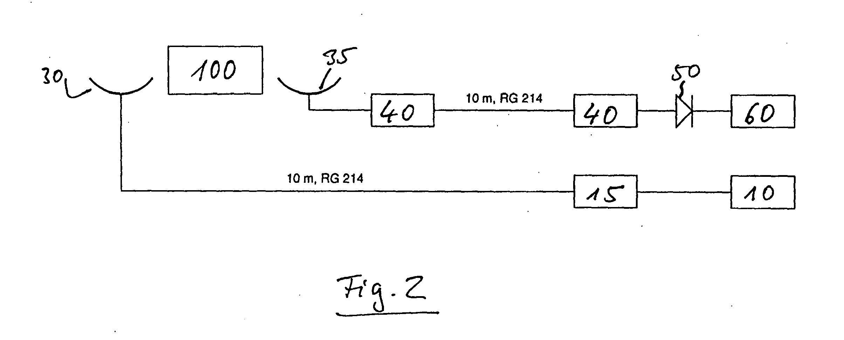

Für den Fall eines Mischers 50 mit nur einem Eingang wie beispielsweise einer Detektordiode erscheint am Ausgang des Mischers eine Spannung bei angenommener quadratischer Kennlinie des Mischers und bei vorgenommener Tiefpass- und Hochpassfilterung ein gefiltertes Mischsignal, daß im wesentlichen von zwei Termen K und M bestimmt ist, wobei K ein zeitabhängiges Produkt der Faktoren des ausgekoppelten Signals 95 mit dem Nutzsignal 80 ist und M ein Produkt mit den Faktoren des Obersprechsignals 90 mit dem Nutzsignal 80 ist. Die weiteren additiven Terme, die bei einer theoretischen Betrachtung anfallen, sind gegenüber den Termen K und M vernachlässigbar. Es kann allerdings sein, daß ein Störterm H größer als die Terme K und M ist. Der Störterm H ist ein Produkt aus dem zeitabhängigen ausgekoppelten Signal 95, dem zeitabhängigen Übersprechsignal 90 und dem Cosinus der zeitabhängigen Phase des Übersprechsignals 90. Der Cosinus der Phase des Übersprechsignals 90 kann mit erheblichen hochfrequenten Anteilen versehen sein, die unter Umständen das Nutzsignal vollständig maskieren können. Dies hat im wesentlichen zwei Ursachen und zwar zum einen mechanische Schwankungen der das Übersprechen bestimmenden Strukturen in der Umgebung der Antennen und Frequenzschwankungen des Senders. Im Anschluß an die Figurenbeschreibung zu Fig. 2 wird die Erfindung in einem Ausführungsbeispiel theoretisch genauer analysiert.

Figur 1 c) stellt eine Ausführungsform der Erfindung dar. Im Gegensatz zu den Ausführungsformen gemäß des Standes der Technik gemäß Figuren 1 a) und b) wird kein ausgekoppeltes Signal 95 in den Mischer 50 geführt. Bevorzugterweise wird auch hier ein Single ended Mischer oder eine Detektordiode verwendet. Es ist also ein Empfänger realisiert, bei dem das Störsignal bzw. in diesem Ausführungsbeispiel das Übersprechsignal 90 selbst zum Mischen benutzt wird. Auf das eigentliche sonst üblicherweise verwendete Mischsignal, nämlich dem ausgekoppelten Signal 95 wird verzichtet. Hierdurch entfällt das Produkt aus dem ausgekoppelten Signal 95 mit dem Übersprechsignal 90, also der Störterm H, der bei Schwankungen der Phasendifferenz zwischen dem ausgekoppelten Signal 95 und dem Übersprechsignal 90 einen wesentlichen Störterm darstellt.

Um einen möglichst rauscharmen Empfang zu erhalten ist beim Aufbau des Radarsystems bzw. der Radareinrichtung darauf zu achten, daß das Störsignal einen Pegel im Arbeitsbereich des Mischers aufweist.

Fig. 2 zeigt ein weiteres Ausführungsbeispiel der vorliegenden Erfindung in schematischer Darstellung. Diese Radareinrichtung bzw. die in Fig. 2 auch dargestellte Empfangseinrichtung ist für RASS-Messungen realisiert. Der Empfänger ist für eine Frequenz von 1290 Mhz vorgesehen. Bei einem weiteren Ausführungsbeispiel sind auch erfolgreiche Versuche bei 10 Ghz durchgeführt worden. Von einem Sendeoszillator 10, einem Syntheziser des Typs SSG-1, der auf 1290 Mhz arbeitet, wird ein Signal zu einem 100 Watt Leistungsverstärker 15 gegeben. Das verstärkte Signal wird auf eine Sendeantenne 30 über ein 10 Meter RG214 Kabel gegeben. Die Sendeantenne ist ein Gitter-Paraboloid-Reflektor. Die Empfangsantenne 35, die das von einer Schallwelle reflektierte Signal 22 empfängt, ist auch ein Gitter-Paraboloid-Reflektor. Das so empfangene Nutzsignal wird in einem ersten Verstärker 40 weitergeleitet. Dieser dient als Vorverstärker und ist ein rauscharmer Verstärker vom Typ ZEL-1217LN. Das vorverstärkte Signal wird in einen weiteren Verstärker 40 gegeben, der auch ein rauscharmer Verstärker vom Typ ZEL-1217LN ist. Als Mischer findet eine Schottky-Diode Typ ACSP-2501N Verwendung. Das durch den Mischer gelangte Signal wird über einen NF-Verstärker mit 2800 bis 3000 Hz zur Weiterverarbeitung verstärkt. Zwischen den Antennen 30 und 35 ist eine Schallquelle 100 angeordnet. Der Abstand zwischen den Antennen mit den Antennenmittelpunkten beträgt ungefähr 5 Meter. Der Durchmesser der Paraboloidspiegel beträgt ca. 2 Meter.

Die Empfangselektronik ist in einem Gehäuse angeordnet und umfaßt den zweiten Verstärker 40, die Schottky-Diode 50 und den NF-Verstärker 60 sowie hinter den zweiten Verstärker 40 angeordnet ein nicht dargestelltes Dämpfungsglied zur Einstellung des Mischer-Arbeitspunktes und darauffolgend zwischen dem zweiten Verstärker und der Schottky-Diode ein HF-Schmalbandfilter mit einer Mittelfrequenz von 1290 Mhz und einer Bandbreite von 100 Mhz, ein Verstärker zur Einstellung des Mischer-Arbeitspunktes und ein DC-Block mit einer Grenzfrequenz von ca. 10 Mhz. Durch den DC-Block wird sowohl die Signalleitung als auch die Masseleitung für Ströme mit einer Frequenz < 10 Mhz unterbrochen. Hierdurch werden induzierte Störungen - z.B. durch Transformatoren und Netzleitungen - unterdrückt. Außerdem ist noch eine Stromversorgung in dem gemeinsamen Gehäuse, das auch nicht dargestellt ist, angeordnet.

Es wird nun auf den folgenden Beschreibungsseiten für ein Ausführungsbeispiel eines RASS theoretisch im einzelnen die Erfindung erläutert.

Symbole

| | |
|---|---|
| $s_a(t)$ | Nutzsignal, (hier Rückstreuung an Schallwellen) |
| $s_c(t)$ | Übersprechsignal (durch Beugung, Reflexion, Streuung ... des Sendesignals) |
| $s_m(t)$ | LO-Signal |
| $\hat{s}(t)$ | (Zeitabhängige) Amplitude von $s(t)$ |
| $\omega_t$ | Kreisfrequenz des Sendesignals |
| $\omega_a$ | Verschiebung der Kreisfrequenz des Streusignals |
| $\Phi_a(t)$ | (Zeitabhängige) Phase des Streusignals |

(fortgesetzt)

$\Phi_t(t)$      (Zeitabhängige) Phase des Sendesignals

$\dot{x}$      Partielle Ableitung von $x$ ($\partial x/\partial t$)

Ansatz

Das Sendesignal und das LO-Signal seien durch einen Sinus mit der Kreisfrequenz $\omega_t$ und der Phase Null beschrieben. Das Mischsignal, das RASS-Streusignal, sowie das Übersprechsignal können dann zweckmäßig in der Form

$$s_m = \hat{s}_m \sin \omega_t t \qquad\qquad (1)$$

$$s_a = \hat{s}_a(t) \sin[(\omega_t - \omega_a)t + \Phi_a(t)] \qquad\qquad (2)$$

$$s_c = \hat{s}_c(t) \sin[(\omega_t - \omega_c)t + \Phi_c(t)] \qquad\qquad (3)$$

dargestellt werden. D.h., die Amplitude des LO-Signals ist praktisch stabil. Dagegen weisen die Amplituden und Phasen des Streu- und Übersprechsignals eine gewisse Zeitabhängigkeit auf.

Annahmen

$$1. \quad \hat{s}_c \gg \hat{s}_a$$

$$2. \quad \omega_a \ll \omega_t$$

3. Alle Signale sind "schmalbandig", d.h. die Zeitabhängigkeit der Amplituden und Phasen ist "langsam" im Vergleich zu $\omega_t$ oder $\omega_t - \omega_a$. Für die quantitative Formulierung dieser Eigenschaft wird für den Sinus die komplexe Schreibweise eingeführt

$$\sin x = \frac{1}{2}[\exp(ix) - \exp(-ix)]$$

und die Abschätzung der Einfachheit halber nur am Beispiel des ersten Summanden gezeigt. Sie gilt für den zweiten entsprechend. Es werden die Bezeichnungen

$$s(t) = s^+(t) + s^-(t)$$

verwendet, mit

$$s^+(t) = \hat{s}(t)\frac{1}{2}\exp(+i\omega t)$$

und

$$s^-(t) = \hat{s}(t)\frac{1}{2}\exp(-i\omega t)$$

Die zeitliche Ableitung von $s_a^+(t)$ ist dann

$$
\dot{s}_a^+(t) = \dot{\hat{s}}_a(t)\exp[i((\omega_t - \omega_a)t + \Phi_a(t))] +
$$
$$
\hat{s}_a(t)i(\omega_t - \omega_a + \dot{\Phi}_a(t))\exp[i((\omega_t - \omega_a)t + \Phi_a(t))]
\tag{4}
$$

was in

$$
\dot{s}_a^+(t) = \dot{\hat{s}}_a(t)\frac{s_a^+(t)}{\hat{s}_a(t)} + i(\omega_t - \omega_a)s_a^+(t) + i\dot{\Phi}_a(t)s_a^+(t)
\tag{5}
$$

bzw.

$$
\dot{s}_a^+(t) = s_a^+(t)\left[\underbrace{\frac{\dot{\hat{s}}_a(t)}{\hat{s}_a(t)}}_{I_a} + \underbrace{i(\omega_t - \omega_a)}_{II_a} + \underbrace{i\dot{\Phi}_a(t)}_{III_a}\right]
\tag{6}
$$

umgeformt werden kann. Für $s_c$ und $s_m$ gilt entsprechend

$$
\dot{s}_c^+(t) = s_c^+(t)\left[\underbrace{\frac{\dot{\hat{s}}_c(t)}{\hat{s}_c(t)}}_{I_c} + \underbrace{i\omega_t}_{II_c} + \underbrace{i\dot{\Phi}_c(t)}_{III_C}\right]
\tag{7}
$$

und

$$\dot{s}_m^+(t) = s_m^+(t) + \underbrace{i\omega_t}_{II_m} \qquad (I_m = III_m = 0) \tag{8}$$

Die Annahme "langsamer" Amplituden- und Phasenschwankungen des Nutz- und Übersprechsignals kann nun ausgedrückt werden durch die Bedingungen:

$$|II_a| \equiv \omega_t - \omega_a \gg |I_a|, \ |III_a| \tag{9}$$

sowie

$$|II_c| \equiv \omega_t \gg |I_c|, \ |III_c| \tag{10}$$

4. Weiterhin wird angenommen, daß die Amplituden- und Phasenschwankungen des Nutzsignals auch "langsam" gegen die Frequenzverschiebung $\omega_a$ des Nutzsignals sind, so daß gilt

$$\omega_a \gg |I_a|, \ |III_a| \tag{11}$$

Auch diese Bedingung ist beim RASS wegen der hohen Geschwindigkeit des Targets (Schallgeschwindigkeit) im allgemeinen erfüllt.

Empfänger gemäß Stand der Technik

Wird ein single-ended Mischer verwendet, so ist das Signal am Mischereingang die Summe

$$s(t) = s_m(t) + s_c(t) + s_a(t), \tag{12}$$

und am Ausgang erscheint bei quadratischer Mischerkennlinie die Spannung

$$m_1(t) = G_1(s_m(t) + s_c(t) + s_a(t))^2. \tag{13}$$

Wird ein idealer balanced Mischer verwendet, so erscheint am Ausgang das Produkt aus dem Mischsignal mit der Summe aus Nutz- und Übersprechsignal:

$$m_2(t) = G_2 s_m(t)(s_c(t) + s_a(t)) \tag{14}$$

$G_1$ und $G_2$ sind konstante Faktoren, die im folgenden weggelassen werden. Ferner wird zunächst nur der single-ended Mischer diskutiert. Das balanced Mischer-Signal unterscheidet sich nur durch das Entfallen einiger Terme. Durch Ausmultiplikation von Gleichung (13) erhält man

$$m_1 = \tag{15}$$

$$\frac{\hat{s}_m^2}{2}(\underbrace{1}_{A} + \underbrace{\sin 2\omega_t t}_{B}) +$$

$$\frac{\hat{s}_c^2(t)}{2}[\underbrace{1}_{C} + \underbrace{\sin 2(\omega_t t + \Phi_c(t))}_{D}] +$$

$$\frac{\hat{s}_a^2(t)}{2}[\underbrace{1}_{E} + \underbrace{\sin 2((\omega_t t - \omega_a)t + \Phi_a(t))}_{F}] +$$

$$\hat{s}_m \hat{s}_c(t)[\underbrace{\sin(2\omega_t + \Phi_c(t))}_{G} + \underbrace{\cos \Phi_c(t)}_{H}] +$$

$$\hat{s}_m \hat{s}_a(t)[\underbrace{\sin((2\omega_t - \omega_a)t + \Phi_a(t))}_{J} + \underbrace{\cos(\omega_a t - \Phi_a(t))}_{K}] +$$

$$\hat{s}_c(t)\hat{s}_a(t)[\underbrace{\sin(2\omega_t + \Phi_a(t) + \Phi_c(t))}_{L} + \underbrace{\cos(\omega_a t - \Phi_a(t) - \Phi_c(t))}_{M}]$$

Durch Tiefpaßfilterung mit der Grenzfrequenz $\omega_{tief}$ im Bereich $\omega_a < \omega_{tief} \ll \omega_t$ entfallen die Terme $B$, $D$, $F$, $G$, $J$ und $L$.
Durch Hochpaßfilterung mit der Grenzfrequenz $\omega_{hoch}$ im Bereich $|\hat{\dot{s}}_a/\hat{s}_a|$, $|\hat{\dot{s}}_c/\hat{s}_c|$, $|\dot{\Phi}_a|$, $|\dot{\Phi}_c| \ll \omega_{hoch} < \omega_a$ entfällt Term $A$.
Das gefilterte Mischsignal hat also die Form:

$$m_1\big|_t^h = \tag{16}$$

$$C\big|_t^h : \quad \frac{\hat{s}_c^2(t)}{2}\big|_t^h +$$

$$E\big|_t^h : \quad \frac{\hat{s}_a^2(t)}{2}\big|_t^h +$$

$$H\big|_t^h : \quad \hat{s}_m \hat{s}_c(t) \cos \Phi_c(t)\big|_t^h +$$

$$K : \quad \hat{s}_m \hat{s}_a(t) \cos(\omega_a t - \Phi_a(t)) +$$

$$M : \quad \hat{s}_c(t)\hat{s}_a(t) \cos(\omega_a t - \Phi_a(t) - \Phi_c(t))$$

Die Terme $K$ und $M$ liegen im Durchlaßbereich der Filter und bleiben daher unverändert. Sie stellen das weiterzuverarbeitende Nutzsignal dar. Die spektrale Energie der Terme $C$, $E$ und $H$ liegt üblicherweise im wesentlichen unterhalb der Hochpaß-Grenzfrequenz. Durch $"\big|_t^h"$ wird angedeutet, daß sie nach der Filterung nur noch abgeschwächt zum Signal beitragen. Im folgenden wird diskutiert, in welchem Maße $C\big|_t^h$, $E\big|_t^h$ und $H\big|_t^h$ dennoch zu Störungen führen können.

$$E\big|_t^h :$$

Wegen der Bedingung entsprechend Gleichung (9) wird der größte Teil der Energie durch die Hochpaßfilterung unterdrückt, d.h es gilt

$$\frac{\hat{s}_a^2(t)}{2}\Big|_t^h \ll s_a^2(t) \tag{17}$$

Ferner gilt

$$s_a^2(t) \ll \hat{s}_c\hat{s}_a(t), \quad \hat{s}_m(t)\hat{s}_a(t). \tag{18}$$

Damit gilt erst recht

$$s_a^2(t)\Big|_t^h \ll \hat{s}_c\hat{s}_a(t), \quad \hat{s}_m(t)\hat{s}_a(t). \tag{19}$$

Also kann $E\big|_t^h$ gegenüber den Nutzsignalen $K$ und $M$ vernachlässigt werden.

$$C\big|_t^h:$$

Auch hier wird durch die Hochpaßfilterung wegen der Bedingung in Gleichung (10) der größte Anteil eliminiert, so daß gilt

$$\frac{\hat{s}_c^2(t)}{2}\Big|_t^h \ll s_c^2(t) \tag{20}$$

Allerdings gilt nicht wie oben

$$s_c^2(t) \ll \hat{s}_c\hat{s}_a(t), \quad \hat{s}_c(t)\hat{s}_a(t)$$

sondern vielmehr

$$\begin{aligned} s_c^2(t) \; &\gg \; \hat{s}_c\hat{s}_a(t) \\ &\text{und im allgemeinen} \\ s_c^2(t) \; &\gg \; \hat{s}_m\hat{s}_a(t) \end{aligned} \tag{21}$$

Es hängt also vom Pegel und vom Spektrum der Amplitudenschwankungen des Übersprechens ab, ob der gefilterte Anteil von $\hat{s}_c$ ausreichend unterdrückt ist, d.h., ob gilt

$$s_c^2(t)|_t^h \ll \hat{s}_c \hat{s}_a(t), \quad \hat{s}_m(t)\hat{s}_a(t). \tag{22}$$

In der Praxis ist dies bei einem RASS meist gegeben. Allenfalls große, schnell bewegliche Objekte (z.B. Vögel) im Strahl können unter Umständen zu kurzzeitigen Störungen durch den Term $C|_t^h$ führen, die jedoch im Zuge der folgenden Signalverarbeitung erkannt und eliminiert werden können.

$$H|_t^h:$$

Im Gegensatz zu *C* und *E* ist dieser Term von der Phase des Übersprechsignals abhängig. Im Gegensatz zu *C* und *E* kann der Faktor $\cos \Phi_c(t)$ mit erheblichen hochfrequenten Anteilen, die u.U. das Nutzsignal vollständig maskieren, variieren, d.h.

$$H|_t^h \gg K, \quad M, \tag{23}$$

Hierfür gibt es im wesentlichen zwei Ursachen:

- Mechanische Schwankungen der das Übersprechen bestimmenden Strukturen in der Umgebung der Antennen mit der Amplitude $\hat{l}$ bewirken Laufwegschwankungen des Übersprechens in der Größenordnung $\hat{l}$ und damit Phasenschwankungen in der Größenordnung $\Delta Phi_c = 2\pi \hat{l}/\lambda$, wobei $\lambda$ die Wellenlänge des Sendesignals ist. Sind die Laufwegschwankungen in der Größenordnung der Wellenlänge, so schwankt die relative Amplitude von $H|_t^h$ zwischen 0 und 1. Sind die Schwankungen klein gegen die Wellenlänge, hängt die Amplitudenschwankung auch von der mittleren Phase $\Phi_c$ ab. Der ungünstigste Fall ist bei der mittleren Phase $\overline{\Phi}_c = \pm\pi/2$ gegeben. Dann ist die relative Amplitudenschwankung von $H|_t^h$ in der Größenordnung $\Delta\Phi_c$.

- Frequenzschwankungen des Senders $\Delta\omega$ führen bei einem Gesamtlaufweg *L* des Übersprechsignals zu Phasenschwankung $\Delta Phi_c = L\Delta\omega/c$. Obwohl $\Delta\omega$ technisch sehr klein gehalten werden kann, so sind die stochastischen Schwankungen von $\omega$ typischerweise über einen weiten Freqenzbereich verteilt, so daß trotz Filterung auch hierdurch störende Schwankungen von $H|_t^h$ entstehen können.

Wird ein (idealer) balanced Mischer verwendet (Gleichung 14) so entfallen einige der oben dikutierten Störterme - insbesondere der Term *C* - jedoch nicht der entscheidende Störterm *H*.

Empfänger gemäß Erfindung Hierfür wird ein single-ended Mischer beispielsweise verwendet.

Im Unterschied zu oben wird hier kein Mischsignal $s_m(t)$ zugeführt. Damit entfallen in Gleichung (15) die Terme *A, B, G, H, J* und *K*. Damit entällt auch ein Beitrag zum Nutzsignal (*K*). Da der verbleibende Term *M* bei geeignetem Übersprechpegel jedoch von gleicher Größenordnung wie *K* ist, ist dies kein Nachteil.

Der entscheidende Vorteil ist aber, daß der dominierende Störterm *H* hier nicht existiert.

Bezugszeichenliste

5  Sender
10  Sendeoszillator
15  Leistungsverstärker
20  Koppler
30  Sendeantenne
35  Empfangsantenne
40  rauscharmer Verstärker

| 50 | Mischer |
|---|---|
| 60 | Niederfrequenzverstärker |
| 70 | Sendesignal |
| 80 | Nutzsignal |
| 90 | Übersprechsignal |
| 95 | ausgekoppeltes Signal |
| 100 | Schallquelle |
| 110 | Schallwellen |

**Patentansprüche**

**1.** Radareinrichtung für radioullushisihe Sondierungs- systemezum Bestimmen von Temperafur - und Windportion in der Almusphäre mit einer Scule- eine Emplangsmleure (35), eine Mischvorrichtung (50) zum Mischen eines Natzsignalss (80) mit einemweiteren Signal und eine Pegelversfärluns vorrichtung ein fast, wobei als Pegel versfärlrcungs vorrichTung ein Versfärler 140, Vorgesehen ist, cler zwischen der Emplamgsam lenne (35) und der Mischvornichlung (50) vorgescluch ist, **dadurch gekennzeichnet, dass** ausschliephich ein von einem sendesignole der fendeeinichlung (5,20,30) auf die Emplangs- einrichlg übasprethendes Überspechsignal (90) in der Mischvorrichlung (50) mit drem Nulzsignal (80) mischbar ist.

**2.** Radareinrichtung nach Anspruch 1,
**dadurch gekennzeichnet, dass** die Pegelverstärkungsvorrichtung einen Reflektor umfasst, der in der Nähe der Sendeeinrichtung (5, 20, 30) angeordnet ist.

**3.** Radareinrichtung nach Anspruch 1,
**dadurch gekennzeichnet, dass** die Pegelverstärkungsvorrichtung eine Verstärkung des Pegels mit einem Wert ermöglicht, der kleiner als 1 ist.

**4.** Radareinrichtung nach Anspruch 3,
**dadurch gekennzeichnet, dass** zum Verstärken des Pegels mit einem Wert, der kleiner als 1 ist, eine Abschirmung der Sende- und/oder der Empfangsantenne (30, 35) vorgesehen ist.

**5.** Radareinrichtung nach einem der Ansprüche 1 bis 4,
**dadurch gekennzeichnet, dass** die Mischvorrichtung (50) nur einen Eingang aufweist.

**6.** Radareinrichtung nach Anspruch 5,
**dadurch gekennzeichnet, dass** die Mischvorrichtung (50) eine Detektordiode, insbesondere eine Schottky-Diode, ist.

**Claims**

**1.** Radar means for radio acoustic sounding systems for determining temperature and wind profiles in the atmosphere with a transmitting means (5, 20, 30) having a transmitting antenna (30) as well as with a receiving means comprising a receiving antenna (35), a mixing device (50) for mixing the useful signal (80) with a further signal, and a level amplification device, wherein an amplifier (40) is provided as said level amplification device, which is arranged between the receiving antenna (35) and the mixing device (50),
**characterized in that** exclusively a crosstalk signal (90) crosstalking from a transmit signal of said transmitting means (5, 20, 30) to said receiving means is mixable with said useful signal in said mixing device (50).

**2.** Radar means according to claim 1,
**characterized in that** said level amplification device comprises a reflector, which is arranged in the proximity of said transmitting means (5, 20, 30).

**3.** Radar means according to claim 1,
**characterized in that** said level amplification device enables an amplification of the level with a value, which is less than 1.

**4.** Radar means according to claim 3,
**characterized in that** for amplifying the level with a value, which is less than 1, a shield of said transmitting and/or receiving antenna (30, 35) is provided.

**5.** Radar means according to one of the claims 1 to 4,
**characterized in that** said mixing device (50) only has one entry.

**6.** Radar means according to claim 5,
**characterized in that** said mixing device (50) is a detector diode, in particular a Schottky diode.


**Revendications**

**1.** Dispositif radar pour systèmes de sondage radio acoustiques, destiné à déterminer les profils de température et de vent de l'atmosphère au moyen d'un dispositif émetteur (5, 20, 30), comportant une antenne émettrice (30), ainsi qu'au moyen d'un dispositif récepteur comportant une antenne de réception (35), un dispositif de mixage (50) pour mixer le signal utile (80) avec un autre signal et un dispositif amplificateur de niveau, un amplificateur (40) étant prévu comme dispositif amplificateur de niveau, qui est prévu entre ladite antenne de réception (35) et ledit dispositif de mixage (50),
**caractérisé en ce qu'**uniquement un signal diaphonique (90) transmis en diaphonie à partir d'un signal d'émission dudit dispositif émetteur (5, 20, 30) audit dispositif récepteur peut être mixé dans ledit dispositif de mixage (90) avec le signal utile.

**2.** Dispositif radar selon la revendication 1,
**caractérisé en ce que** ledit dispositif amplificateur de niveau comporte un réflecteur disposé à proximité dudit dispositif émetteur (5, 20, 30).

**3.** Dispositif radar selon la revendication 1,
**caractérisé en ce que** ledit dispositif amplificateur de niveau permet une amplification du niveau avec une valeur inférieure à 1.

**4.** Dispositif radar selon la revendication 3,
**caractérisé en ce que** pour amplifier le niveau avec une valeur inférieure à 1, un blindage de ladite antenne émettrice et/ou de ladite antenne de réception (30, 35) est prévu.

**5.** Dispositif radar selon une des revendications 1 à 4,
**caractérisé en ce que** ledit dispositif de mixage (50) ne présente qu'une seule entrée.

**6.** Dispositif radar selon la revendication 5,
**caractérisé en ce que** ledit dispositif de mixage (50) est une diode détectrice, en particulier une diode Schottky.

Fig. 1

100

30 35 50

40    10 m, RG 214    40    60

10 m, RG 214    15    10

Fig. 2

EP 1 147 432 B1